# EUROPÄISCHE PATENTSCHRIFT

(11) **EP 3 985 175 B1**
(45) Veröffentlichungstag und Bekanntmachung des Hinweises auf die Patenterteilung: **10.12.2025**
(21) Anmeldenummer: 21200701.7
(22) Anmeldetag: 04.10.2021
(51) Int. Cl.: E02F 3/36, E02F 9/22

(54) **SCHNELLWECHSELSYSTEM ZUM WECHSELN VON ANBAUGERÄTEN AN EINER BAUMASCHINE**
QUICK CHANGE SYSTEM FOR CHANGING ATTACHMENTS ON A CONSTRUCTION MACHINE
SYSTÈME DE CHANGEMENT RAPIDE PERMETTANT DE CHANGER LES ACCESSOIRES SUR UNE MACHINE DE CONSTRUCTION

(30) Priorität: 16.10.2020 DE 102020127313
(43) Veröffentlichungstag der Anmeldung: 20.04.2022
(73) Patentinhaber: OilQuick Deutschland KG, 82297 Steindorf (DE)
(72) Erfinder: Schauer, Stefan, 86438 Kissing (DE)
(74) Vertreter: Charrier Rapp & Liebau

(56) Entgegenhaltungen:
- WO-A1-2014/058380
- DE-U1- 202014 001 328
- US-A1- 2013 318 841

## Beschreibung

Die Erfindung betrifft ein Schnellwechselsystem zum Wechseln von Anbaugeräten an einer Baumaschine nach dem Oberbegriff des Anspruchs 1.

Ein solches Schnellwechselsystem zum einfachen und bequemen Wechseln von unterschiedlichen Anbaugeräten an Baumaschinen ist aus der WO 2014/058380 A1 bekannt. Dieses enthält einen an einem Anschlussteil mittels eines hydraulischen Drehantriebs um eine Drehachse drehbar und mittels eines hydraulischen Schwenkantriebs um eine zur Drehachse orthogonale Schwenkachse schwenkbar angeordneten Schnellwechsler, der Aufnahmen und mindestens ein mittels eines Hydroantriebs betätigbares Verriegelungselement zur Halterung eines am Schnellwechsler angekoppelten Anbaugeräts aufweist. Durch den Drehantrieb können die an dem Schnellwechsler angekoppelten Anbaugeräte, wie z.B. Schwenklöffel, Greifer, Scheren, Verdichter, Magnete, Hydraulikhammer oder dgl., nicht nur um eine quer zur Längsachse eines Baggerstiels angeordnete Schwenkachse, sondern auch um eine zur dieser Schwenkachse orthogonale Drehachse gedreht werden.

In der US 2013/0318841 A1 ist ein Schnellwechsler offenbart, der ein mittels eines Hydroantriebs betätigbares Verriegelungselement zur Halterung eines am Schnellwechsler ankoppelbaren Anbaugeräts enthält. Die Ansteuerung des Hydroantriebs erfolgt über einen Steuerkreis, der ein Wechselventil zur wahlweisen Verbindung eines Steuerventils mit einer Primär- und Sekundärpumpe enthält.

Aufgabe der Erfindung ist es, ein Schnellwechselsystem der eingangs genannten Art zu schaffen, das eine Verriegelung der Anbaugeräte an dem Schnellwechsler mit einer erhöhten Sicherheit ermöglicht.

Diese Aufgabe wird durch ein Schnellwechselsystem mit den Merkmalen des Anspruchs 1 gelöst. Zweckmäßige Ausgestaltungen und vorteilhafte Weiterbildungen der Erfindung sind in den Unteransprüchen angegeben.

Das erfindungsgemäße Schnellwechselsystem zum Wechseln von Anbaugeräten an einer Baumaschine enthält einen an einem Anschlussteil mittels eines hydraulischen Drehantriebs um eine Drehachse drehbar und mittels eines hydraulischen Schwenkantriebs um eine zur Drehachse orthogonale Schwenkachse schwenkbar angeordneten Schnellwechsler, der Aufnahmen und mindestens ein mittels eines Hydroantriebs betätigbares Verriegelungselement zum Halterung eines am Schnellwechsler angekoppelten Anbaugeräts enthält. Das Schnellwechselsystem enthält außerdem eine hydraulische Steuereinrichtung, die einen ersten Steuerkreis zur Ansteuerung des Drehantriebs und des Schwenkantriebs, mindestens einen weiteren Steuerkreis zur Versorgung des an den Schnellwechsler angekoppelten Anbaugeräts und eine Wechselventilanordnung zur Beaufschlagung des Hydroantriebs mit dem höheren der im ersten oder dem mindestens einen weiteren Steuerkreis wirkenden Drücke für die Betätigung der Verriegelungseinrichtung enthält. Die Wechselventilanordnung ist einer Steuerschaltung zur Steuerung der Bewegung des mindestens einen durch den Hydroantrieb betätigten Verriegelungselements zwischen einer Verriegelungsstellung und einer Lösestellung vorgeschaltet. Der Hydroantrieb für die Betätigung der Verriegelung wird dabei von dem ersten und dem mindestens einen weiteren Steuerkreis versorgt, wobei immer der Steuerkreis mit dem höheren Druck Vorrang hat. Dadurch kann sichergestellt werden, dass die Verriegelung immer mit dem höchsten zur Verfügung stehenden Druck erfolgt und somit ein hoher Sicherheitsstandard erreicht wird.

In einer zweckmäßigen Ausführung weist die Wechselventilanordnung zwei zwischen dem weiteren Steuerkreis und dem Hydroantrieb angeordnete Wechselventile auf. Die beiden Wechselventile sind vorzugsweise hintereinandergeschaltet und derart angeordnet, dass der für die Betätigung der Verriegelung vorgesehene Hydroantrieb immer mit dem höchsten zur Verfügung stehenden Druck beaufschlagt wird.

Die Steuerschaltung kann in zweckmäßiger Weise in Art einer Gleichrichterschaltung angeordnete Rückschlagventile und ein Wegeventil enthalten. Durch die Steuerschaltung kann sichergestellt werden, dass der Hydroantrieb zur Betätigung des mindestens einen Verriegelungselements ordnungsgemäß erfolgt auch unabhängig davon, welche der Steuerleitungen des Steuerkreises mit Druck beaufschlagt wird.

In einer weiteren zweckmäßigen Ausführung können der erste und der mindestens eine weitere Steuerkreis über die Steuerschaltung und eine in den Schnellwechsler integrierte Drehdurchführung mit dem Hydroantrieb verbunden sein. Aufgrund ihrer im Schnellwechsler integrierten Anordnung und Ausführung kann die Drehdurchführung mehrere Versorgungskanäle für die Zuführung eines Arbeitsfluids zu dem Schnellwechsler aufweisen. Dadurch können auch Anbaugeräte mit mehreren Anschlüssen versorgt werden. Durch Zusammenschaltung oder Zusammenführung mehrerer Versorgungskanäle können so auch hochvolumige Versorgungsleitungen zur Erreichung höherer Durchflussmengen bei niedrigen Staudrücken geschaffen werden.

Durch den ersten Steuerkreis können der Drehantrieb über ein erstes Wegeventil und der Schwenkantrieb über ein zweites Wegeventil angesteuert werden. Durch den ersten Steuerkreis sind auch weitere zusätzliche Verbraucher über entsprechende Wegeventile ansteuerbar.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Schnellwechselsystem mit einem Schnellwechsler, einem Anschlussteil und einer Dreheinrichtung in einer Perspektivansicht;
- **Figur 2**: das Schnellwechselsystem von Figur 1 in einem Teilschnitt und
- **Figur 3**: eine Hydraulikschaltung zur Ansteuerung des in den Figuren 1 und 2 gezeigten Schnellwechselsystems.

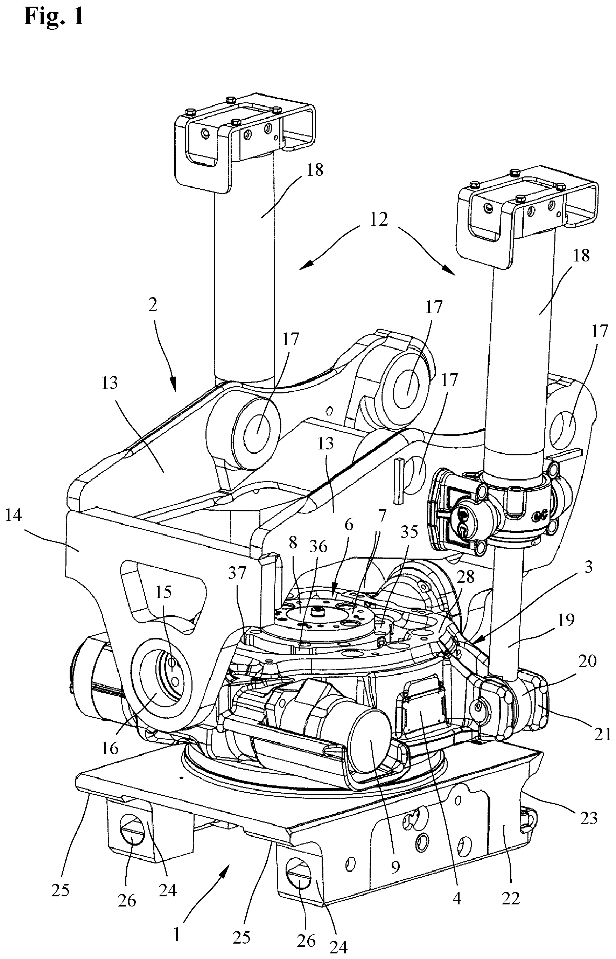

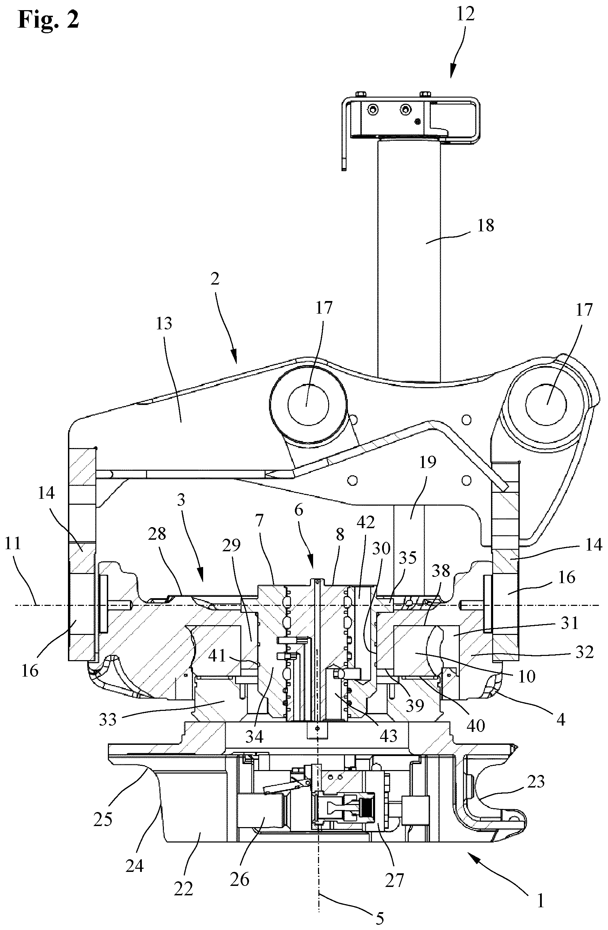

In den Figuren 1 und 2 ist ein Ausführungsbeispiel eines Schnellwechselsystems mit einem Schnellwechsler 1 zum automatischen Ankuppeln eines Anbaugeräts, einem Anschlussteil 2 zur Montage des Schnellwechslers 1 an einen Baggerstiel oder einem anderen Anbauelement einer Baumaschine und einer zwischen dem Schnellwechsler 1 und dem Anschlussteil 2 angeordneten Dreheinrichtung 3 zur Drehung des Schnellwechslers 1 relativ zum Anschlussteil 2 gezeigt. Die Dreheinrichtung 3 enthält ein Antriebsgehäuse 4, in dem der Schnellwechsler 1 um eine in Figur 2 gezeigte - hier vertikal ausgerichtete - Drehachse 5 drehbar gelagert ist. In dem Antriebsgehäuse 4 der Dreheinrichtung 3 ist außerdem eine Drehdurchführung 6 mit einem im Antriebsgehäuse 4 gegenüber diesem drehfest angeordneten Stator 7 und einem innerhalb des Stator drehbar gelagerten Rotor 8 für die Zuführung eines Arbeitsfluids zum Schnellwechsler 1 angeordnet. Der Schnellwechsler 1 ist durch einen in Figur 1 gezeigten, als Hydromotor ausgebildeten Drehantrieb 9 und ein Getriebe mit einem hier als Schneckenrad ausgebildeten, in Figur 2 erkennbaren Antriebsrad 10 über eine nicht dargestellte Antriebsschnecke relativ zum Antriebsgehäuse 1 um die Drehachse 5 um 360° motorisch drehbar.

Bei der gezeigten Ausführung ist das Antriebsgehäuse 4 der Dreheinrichtung 3 an dem Anschlussteil 2 um eine zur Drehachse 5 orthogonale Schwenkachse 11 schwenkbar angeordnet und kann über einen hier durch zwei Stellzylinder gebildeten Schwenkantrieb 12 relativ zum Anschlussteil 2 um die Schwenkachse 11 geschwenkt werden. Der Schwenkantrieb 12 zum Kippen des Antriebsgehäuses 4 gegenüber dem Anschlussteil 2 kann aber auch als Schwenkmotor oder dgl. ausgeführt sein. Durch ein derartiges - auch als Tiltrotator bezeichnetes - Schnellwechselsystem können die an dem Schnellwechsler 1 angekoppelten Anbaugeräte nicht nur um die Drehachse 5 gedreht, sondern zusätzlich auch gegenüber dem Anschlussteil 2 um die zur Drehachse 5 orthogonale Schwenkachse gekippt werden, wodurch die Bewegungsmöglichkeiten erweitert werden und dadurch der Einsatzbereich vergrößert wird. Das Antriebsgehäuse 4 kann aber auch ohne zusätzliche Schwenkmöglichkeit fest an dem Anschlussteil 2 angeordnet sein, so dass der Schnellwechsler 1 gegenüber dem Anschlussteil 2 nur um die Drehachse 5 drehbar ist.

Das Anschlussteil 2 weist bei dem gezeigten Ausführungsbeispiel zwei zueinander parallele Seitenwangen 13 sowie vordere und hintere Querstücke 14 auf. Das Antriebsgehäuse 4 ist über in Figur 1 erkennbare Lagerzapfen 15 in entsprechenden Lagerbohrungen 16 der vorderen und hinteren Querstücke 14 um die Schwenkachse 11 schwenkbar gelagert. Über Bohrungen 17 in den beiden Seitenwangen 13 ist das Anschlussteil 2 an einem Stiel und einer Koppel eines Baggers montierbar. Der Schwenkantrieb 12 wird bei der gezeigten Ausführung gebildet durch zwei Stellzylinder mit jeweils einem an der jeweiligen Seitenwange 13 des Anschlussteils 2 befestigten Zylindergehäuse 18 und einer im Zylindergehäuse 18 verschiebbar angeordneten und hydraulisch bewegbaren Kolbenstange 19, deren freies Ende über ein Gelenkauge 20 und eine entsprechenden Halterung 21 mit dem Antriebsgehäuse 4 verbunden ist. Durch entsprechendes Ein- und Ausfahren der beiden Kolbenstangen 19 kann so das Antriebsgehäuse 14 gegenüber dem Anschlussteil 2 gekippt werden.

Der in Figur 2 in einem Schnitt dargestellte Schnellwechsler 1 enthält einen als Schweißkonstruktion oder als Gußteil ausgeführten Träger 22, der zur einen Seite hin offene erste Aufnahmen 23 zur Aufnahme und Halterung eines ersten bolzenförmigen Kopplungselements an der einen Seite und zur anderen Seite sowie nach unten offene zweite Aufnahmen 24 zur Aufnahme und Halterung eines zweiten bolzenförmigen Kopplungselements an der anderen Seite aufweist.

Bei dem gezeigten Ausführungsbeispiel weist der Schnellwechsler 1 an der einen Seite des Trägers 22 zwei voneinander beabstandete Aufnahmen 23 für ein vorderes Kopplungselement und auf der anderen Seite zwei Aufnahmen 24 für ein hinteres Kopplungselement auf. Die zur der einen Seite offenen ersten Aufnahmen 23 sind klauen- oder gabelförmig ausgeführt. Die zur anderen Seite und nach unten offenen zweiten Aufnahmen 24 weisen eine gekrümmte untere Anlagefläche 25 zur Anlage eines bolzenförmigen Kopplungselements auf. An den zweiten Aufnahmen 24 ist eine Verriegelungseinrichtung mit zwei zwischen einer ausgefahrenen Verriegelungsstellung und einer eingefahrenen Entriegelungsstellung bewegbaren bolzenförmigen Verriegelungselementen 26 vorgesehen. Die beiden bolzenförmigen Verriegelungselemente 26 sind innerhalb des Trägers 22 verschiebbar geführt und durch einen in Figur 2 erkennbaren, hier als Hydrozylinder ausgebildeten Hydroantrieb 27 zwischen einer eingefahrenen Entriegelungsstellung zum Lösen oder Ankoppeln eines Adapters oder eines Anbaugeräts und einer in Figur 1 gezeigten ausgefahrenen Verriegelungsstellung bewegbar. In der ausgefahrenen Verriegelungsstellung werden die nach unten offenen zweiten Aufnahmen 24 von den in Führungsbohrungen im Träger 22 verschiebbar angeordneten Verriegelungselementen 26 an der Unterseite geschlossen, so dass das Kopplungselement von den bolzenförmigen Verriegelungselementen 26 untergriffen wird.

Um mit Hilfe des Schnellwechslers 1 ein Anbaugerät anzukuppeln, wird der über das Anschlussteil 2 in der Regel an einem Baggerstiel und einer Koppel eines Baggers angeordnete Schnellwechsler 1 zunächst so bewegt, dass ein an einem Adapter oder direkt an dem Anbaugerät angeordnetes vorderes bolzenförmiges Kopplungselement in die klauen- bzw. gabelförmigen Aufnahmen 23 auf der einen Seite des Schnellwechslers 1 eingefahren wird. Dann wird der Schnellwechsler 1 mit noch zurückgezogenen Verriegelungselementen 26 um das vordere bolzenförmige Kopplungselement so geschwenkt, dass das hintere Kopplungselement am Adapter oder Anbaugerät zur Anlage an den Anlageflächen 25 der nach unten offenen Aufnahmen 24 auf der anderen Seite des Schnellwechslers 1 gelangt. Anschließend können die in Führungsbohrungen im Träger 22 des Schnellwechslers 1 verschiebbar angeordneten Verriegelungselemente 26 über den Hydroantrieb 27 ausgefahren werden, so dass das hintere bolzenförmige Kopplungselement von den beiden Verriegelungselementen 26 an dem Schnellwechsler 1 untergriffen und das Anbaugerät somit an dem Schnellwechsler 1 gehalten wird.

Wie aus Figur 2 hervorgeht, weist das aus einem Teil bestehende Antriebsgehäuse 4 eine obere ringförmige Deckfläche 28, eine von einem inneren Lagerring 29 des Antriebsgehäuses 4 begrenzte zentrale Durchgangsöffnung 30 und einen um den Lagerring 29 angeordneten, nach unten offenen Ringraum 31 zur Aufnahme des Antriebsrads 10 auf. Der Ringraum 31 wird zwischen der Außenseite des inneren Lagerrings 29 und einer Innenseite einer äußeren Umfangswand 32 des Antriebsgehäuses 4 begrenzt. Das Antriebsrad 10 ist axial gesichert auf der Außenseite des sich axial über nahezu die gesamte Höhe des Antriebsrads 10 erstreckenden inneren Lagerrings 29 des Antriebsgehäuses 4 drehbar gelagert und dient nicht nur zum Antrieb, sondern auch zur drehbaren Lagerung des Schnellwechsler 1 innerhalb des Antriebsgehäuses 4. Hierzu ist der Träger 22 des Schnellwechslers 1 über einen Zwischenring 33 fest mit dem auf dem Lagerring 29 des Antriebsgehäuses 4 drehbar gelagerten und axial gesicherten Antriebsrad 10 verbunden. Der Zwischenring 33 kann fest mit dem Träger 22 verschweißt und über Schrauben fest mit dem Antriebsrad 10 verbunden sein.

Der Stator 7 weist einen hohlzylindrischen Grundkörper 34 und einen ringförmigen oberen Halteflansch 35 mit in Figur 1 gezeigten äußeren Ansätzen 36 zum formschlüssigen Eingriff in entsprechende Vertiefungen 37 an der oberen Deckfläche 28 des Antriebsgehäuses 4 auf. Über die Ansätze 36 an dem Halteflansch 35 und die entsprechenden Vertiefungen 37 an der oberen Deckfläche 28 des Antriebsgehäuses 4 ist der Stator 7 gegen Verdrehen gesichert in dem Antriebsgehäuse 4 gehalten. Der Außendurchmesser des hohlzylindrischen Grundkörpers 34 ist so an den Innendurchmesser der Durchgangsöffnung 28 im Antriebsgehäuse 4 angepasst, dass der Stator 7 radial gegenüber dem Antriebsgehäuse 4 abgestützt ist. Die radiale Abstützung des Stators 7 gegenüber dem Antriebsgehäuse 4 erfolgt nicht nur im oberen Bereich des Grundkörpers 34, sondern auch unterhalb einer oberen Stirnfläche 38 des Antriebsrads, so dass der Stator 7 über einen großen Teil seiner Länge gegenüber dem Antriebsgehäuse 4 radial abgestützt ist.

Wie aus Figur 2 ersichtlich ist, erstreckt sich der Lagerring 29 innerhalb des Antriebsgehäuses 4 relativ weit nach unten. Bei er gezeigten Ausführung ist ein unteres Ende 39 des Lagerrings 29 im Bereich einer unteren Stirnfläche 40 des Antriebsrads 10 angeordnet. Der Stator 7 der Drehdurchführung 6 füllt die Durchgangsöffnung 30 im Lagerring 29 vollständig aus, so dass sich eine geschlossene Bauweise ergibt. Zwischen dem hohlzylindrischen Grundkörper 34 des Stators 7 und dem Antriebsgehäuse 4 sind hier als ringförmige Dichtungen mit O-förmigen oder rechteckigen Querschnitt ausgebildete Dichtelemente 41 angeordnet. Bei der gezeigten Ausführung ist der Stator 7 der Drehdurchführung 6 in der Durchgangsöffnung 30 des Antriebsgehäuses 4 über drei axial voneinander beabstandete Dichtelemente 41 radial abgedichtet angeordnet. Die Drehdurchführung 6 weist in an sich bekannter Weise mehrere Versorgungskanäle mit im Stator 7 angeordneten ersten Kanalabschnitten 42 und mit diesen in Verbindung stehenden zweiten Kanalabschnitten 43 im Rotor 8 auf.

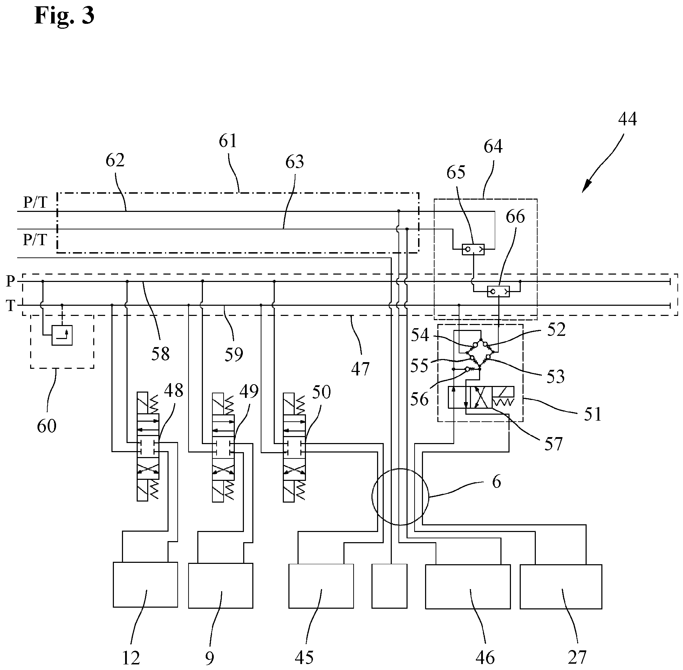

In Figur 3 ist ein Schaltplan einer hydraulischen Steuereinrichtung 44 zur Steuerung des vorstehend beschriebenen Schnellwechselsystems gezeigt. Die hydraulische Steuereinrichtung 44 ist zur Ansteuerung des Drehantriebs 9 für die Steuerung der Drehbewegung des Schnellwechslers 1 um die Drehachse 5, zur Ansteuerung des Schwenkantriebs 12 für die Steuerung der Schwenk- oder Kippbewegung des Schnellwechslers 1 um die Schwenkachse 11, zur Steuerung des als Hydrozylinder ausgebildeten Hydroantriebs 27 für die Verriegelungseinrichtung, zur Steuerung eines zusätzlichen Verbrauchers 45 und zur Versorgung und Ansteuerung eines an den Schnellwechsler 1 angekoppelten und hydraulisch betriebenen Anbaugeräts 46 konzipiert. Bei dem Anbaugerät 46 kann es sich z.B. um einen sogenannten Dauerläufer, d.h. einen im Dauerbetrieb arbeitenden Hammer, Rüttler und dgl. handeln. Solche Anbaugeräte werden üblicherweise mit einem höheren Volumenstrom betrieben.

Die hydraulische Steuereinrichtung 44 enthält einen ersten Steuerkreis 47, durch den der Schwenkantrieb 12 für die Steuerung der Schwenk- oder Kippbewegung des Schnellwechslers 1 um die Schwenkachse 11 über ein als 4/3-Wegeventil ausgebildetes erstes Wegeventil 48 und der Drehantrieb 9 zur Drehung des Schnellwechslers 1 um die Drehachse 5 über ein ebenfalls als 4/3 Wegeventil ausgebildetes zweites Wegeventil 49 ansteuerbar sind. Durch den ersten Steuerkreis 47 ist außerdem der zusätzliche Verbraucher 45 über ein als 4/3-Wegeventil ausgebildetes drittes Wegeventil 50 ansteuerbar. Durch den ersten Steuerkreis 47 kann ferner der als Hydrozylinder ausgebildete Hydroantrieb 27 für die Verriegelungseinrichtung über eine Steuerschaltung 51 mit vier in Art einer Gleichrichterschaltung angeordneten Rückschlagventilen 52 bis 55, einem weiteren Rückschlagventil 56 und einem federbeaufschlagten, elektrisch betätigten 4/2-Wegeventil 57 gesteuert werden. Der erste Steuerkreis 47 weist eine erste Steuerleitung 58 und eine zweite Steuerleitung 59 auf und ist über die Steuerschaltung 51 und die Drehdurchführung 6 mit dem Hydroantrieb 27 zur Bewegung der in Figur 2 gezeigten bolzenförmigen Verriegelungselemente 26 zwischen einer ausgefahrenen Verriegelungsstellung und einer eingefahrenen Lösestellung verbunden. In der in Figur 3 gezeigten Stellung des 4/2-Wegeventils 57 werden die in Figur 2 gezeigten Verriegelungselemente 26 von dem Hydroantrieb 27 in die ausgefahrene Verriegelungsstellung gedrückt. Durch Betätigung des 4/2-Wegeventils 57 können dagegen die Verriegelungselemente 26 in die eingezogene Lösestellung bewegt werden. Über ein in dem ersten Steuerkreis 47 angeordnetes Druckbegrenzungsventil 60 kann der Druck im ersten Steuerkreis 47 auf einen vorbestimmten Maximalwert begrenzt werden. Durch das Druckbegrenzungsventil 60 kann z.B. der Druck im ersten Steuerkreis 47 auf einen Maximaldruck von 225 bar begrenzt werden.

Zur Steuerung und zur Versorgung des an den Schnellwechsler 1 angekoppelten Anbaugeräts 46 enthält die hydraulische Steuereinrichtung 44 ferner einen weiteren Steuerkreis 61. Der mit einer dritten Steuerleitung 62 und einer vierten Steuerleitung 63 versehene weitere Steuerkreis 61 ist über die Drehdurchführung 6 mit dem Anbaugeräts 46 verbunden und wird mit einem gegenüber dem ersten Steuerkreis 47 höheren Druck von z.B. maximal 350 bar betrieben, um die Versorgung des Anbaugeräts 46 auch mit einem hohen Volumenstrom zu gewährleisten.

Die hydraulische Steuereinrichtung 44 weist außerdem eine der Steuerschaltung 51 vorgeschaltete Wechselventilanordnung 64 mit zwei hintereinander geschalteten Wechselventilen 65 und 66 auf. Durch die Wechselventilanordnung 64 wird gewährleistet, dass der Hydroantrieb 27 für die Betätigung der Verriegelungselemente 26 mit den jeweils höheren der im ersten oder zweiten Steuerkreis wirkenden Drücke beaufschlagt wird. Der Hydroantrieb 27 für die Betätigung der Verriegelung wird dabei von beiden Steuerkreisen 47 und 61 versorgt, wobei immer der Steuerkreis mit dem höheren Druck Vorrang hat. Dadurch kann sichergestellt werden, dass die Verriegelung immer mit dem höchsten zur Verfügung stehenden Druck erfolgt und somit ein hoher Sicherheitsstandard erreicht wird.

Die Erfindung ist nicht auf das vorstehend beschriebene Ausführungsbeispiel beschränkt. So können anstelle der hier vorliegenden zwei Steuerkreise auch mehrere weitere Steuerkreise vorhanden sein.

### Bezugszeichenliste

- 1: Schnellwechsler
- 2: Anschlussteil
- 3: Dreheinrichtung
- 4: Antriebsgehäuse
- 5: Drehachse
- 6: Drehdurchführung
- 7: Stator
- 8: Rotor
- 9: Drehantrieb
- 10: Antriebsrad
- 11: Schwenkachse
- 12: Schwenkantrieb
- 13: Seitenwange
- 14: Querstück
- 15: Lagerzapfen
- 16: Lagerbohrung
- 17: Bohrung
- 18: Zylindergehäuse
- 19: Kolbenstange
- 20: Gelenkauge
- 21: Halterung
- 22: Träger
- 23: Erste Aufnahme
- 24: Zweite Aufnahme
- 25: Anlagefläche
- 26: Verriegelungselement
- 27: Hydroantrieb
- 28: Deckfläche
- 29: Lagerring
- 30: Durchgangsöffnung
- 31: Ringraum
- 32: Umfangswand
- 33: Zwischenring
- 34: Grundkörper
- 35: Halteflansch
- 36: Ansatz
- 37: Vertiefung
- 38: Obere Stirnfläche
- 39: Unteres Ende des Lagerrings
- 40: Untere Stirnfläche
- 41: Dichtelemente
- 42: Erster Kanalabschnitt
- 43: Zweiter Kanalabschnitt
- 44: Hydraulische Steuereinrichtung
- 45: Zusätzlicher Verbraucher
- 46: Anbaugerät
- 47: Erster Steuerkreis
- 48: Erstes Wegeventil
- 49: Zweites Wegeventil
- 50: Drittes Wegeventil
- 51: Schaltung
- 52: Erstes Rückschlagventil
- 53: Zweites Rückschlagventil
- 54: Drittes Rückschlagventil
- 55: Viertes Rückschlagventil
- 56: Fünftes Rückschlagventil
- 57: 4/2-Wegeventil
- 58: Erste Steuerleitung
- 59: Zweite Steuerleitung
- 60: Druckbegrenzungsventil
- 61: Weiterer Steuerkreis
- 62: Dritte Steuerleitung
- 63: Vierte Steuerleitung
- 64: Wechselventilanordnung
- 65: Erstes Wechselventil
- 66: Zweites Wechselventil

## Patentansprüche

1. Schnellwechselsystem zum Wechseln von Anbaugeräten an einer Baumaschine mit einem an einem Anschlussteil (2) mittels eines hydraulischen Drehantriebs (9) um eine Drehachse (5) drehbar und mittels eines hydraulischen Schwenkantriebs (12) um eine zur Drehachse (5) orthogonale Schwenkachse (11) schwenkbar angeordneten Schnellwechsler (1), der Aufnahmen (23, 24) und mindestens ein mittels eines Hydroantriebs (27) betätigbares Verriegelungselement (26) zur Halterung eines am Schnellwechsler (1) angekoppelten Anbaugeräts (46) enthält, **gekennzeichnet durch** eine hydraulische Steuereinrichtung (44), die einen ersten Steuerkreis (47) zur Ansteuerung des Drehantriebs (9) und des Schwenkantriebs (12), mindestens einen weiteren Steuerkreis (61) zur Versorgung des an den Schnellwechsler (1) angekoppelten Anbaugeräts (46) und eine Wechselventilanordnung (64) zur Beaufschlagung des Hydroantriebs (27) mit dem höheren der im ersten oder dem mindestens einen weiteren Steuerkreis (47, 61) wirkenden Drücke für die Betätigung des mindestens einen Verriegelungselements (26) enthält, wobei die Wechselventilanordnung (64) einer Steuerschaltung (51) zur Steuerung der Bewegung des mindestens einen durch den Hydroantrieb (27) betätigten Verriegelungselements (26) zwischen einer Verriegelungsstellung und einer Lösestellung vorgeschaltet ist.

2. Schnellwechselsystem nach Anspruch 1, **dadurch gekennzeichnet, dass** die Wechselventilanordnung (64) zwei zwischen dem weiteren Steuerkreis (61) und dem Hydroantrieb (27) angeordnete Wechselventile (65, 66) umfasst.

3. Schnellwechselsystem nach Anspruch 2, **dadurch gekennzeichnet, dass** die beiden Wechselventile (65, 66) hintereinandergeschaltet sind.

4. Schnellwechselsystem nach Anspruch einem der Ansprüche 1 bis 3, **dadurch gekennzeichnet, dass** die Steuerschaltung (51) zur Steuerung der Bewegung des mindestens einen durch den Hydroantrieb (27) betätigten Verriegelungselements (26) in Art einer Gleichrichterschaltung angeordnete Rückschlagventile (52 bis 55) und ein Wegeventil (57) enthält.

5. Schnellwechselsystem nach einem der Ansprüche 1 bis 4, **dadurch gekennzeichnet, dass** der erste Steuerkreis (47) und der mindestens eine weitere Steuerkreis (61) über die Steuerschaltung (51) und eine in dem Schnellwechsler (1) integrierte Drehdurchführung (6) mit dem Hydroantrieb (27) verbunden sind.

6. Schnellwechselsystem nach Anspruch 5, **dadurch gekennzeichnet, dass** die Drehdurchführung (6) einen innerhalb einer Durchgangsöffnung (30) eines Antriebsgehäuses (4) angeordneten Stator (7) und einen innerhalb des Stators (7) drehbar gelagerten Rotor (8) enthält.

7. Schnellwechselsystem nach einem der Ansprüche 1 bis 6, **dadurch gekennzeichnet, dass** durch den ersten Steuerkreis (47) der Schwenkantrieb (12) über ein erstes Wegeventil (48) und der Drehantrieb (9) über ein zweites Wegeventil (49) ansteuerbar sind.

8. Schnellwechselsystem nach einem der Ansprüche 1 bis 7, **dadurch gekennzeichnet, dass** durch den ersten Steuerkreis (47) mindestens ein weiterer zusätzlicher Verbraucher (45) über ein Wegeventil (50) ansteuerbar ist.

## Claims

1. Quick-change system for changing attachments on a construction machine, comprising a quick coupler (1) arranged on a connecting part (2) so as to be rotatable about a rotational axis (5) by means of a hydraulic rotary drive (9) and so as to be pivotable about a pivot axis (11) orthogonal to the rotational axis (5) by means of a hydraulic pivot drive (12), which quick coupler contains receptacles (23, 24) and at least one locking element (26), which can be actuated by means of a hydraulic drive (27), for holding an attachment (46) coupled to the quick coupler (1), **characterized by** a hydraulic control device (44) which contains a first control loop (47) for controlling the rotary drive (9) and the pivot drive (12), at least one additional control loop (61) for supplying the attachment (46) coupled to the quick coupler (1), and a shuttle valve arrangement (64) for applying the higher of the pressures acting in the first or the at least one additional control loop (47, 61) to the hydraulic drive (27) for actuating the at least one locking element (26), the shuttle valve arrangement (64) being connected upstream of a control circuit (51) for controlling the movement of the at least one locking element (26), which is actuated by the hydraulic drive (27), between a locking position and a release position.

2. Quick-change system according to claim 1, **characterized in that** the shuttle valve arrangement (64) comprises two shuttle valves (65, 66) arranged between the additional control loop (61) and the hydraulic drive (27).

3. Quick-change system according to claim 2, **characterized in that** the two shuttle valves (65, 66) are connected in series.

4. Quick-change system according to claim any of claims 1 to 3, **characterized in that** the control circuit (51) for controlling the movement of the at least one locking element (26) actuated by the hydraulic drive (27) contains check valves (52 to 55), which are arranged in the manner of a rectifier circuit, and a directional valve (57).

5. Quick-change system according to any of claims 1 to 4,
**characterized in that** the first control loop (47) and the at least one additional control loop (61) are connected to the hydraulic drive (27) via the control circuit (51) and a rotary feed-through (6) integrated in the quick coupler (1).

6. Quick-change system according to claim 5, **characterized in that** the rotary feed-through (6) contains a stator (7) arranged within a through-opening (30) of a drive housing (4) and a rotor (8) rotatably mounted within the stator (7).

7. Quick-change system according to any of claims 1 to 6,
**characterized in that** the first control loop (47) can control the pivot drive (12) via a first directional valve (48) and the rotary drive (9) via a second directional valve (49).

8. Quick-change system according to any of claims 1 to 7,
**characterized in that** at least one further additional load (45) can be controlled by the first control loop (47) via a directional valve (50).

## Revendications

1. Système de changement rapide pour le changement d'outils portés sur une machine de chantier comportant un dispositif de changement rapide (1) disposé sur une pièce de raccordement (2) de manière à pouvoir tourner autour d'un axe de rotation (5) au moyen d'un entraînement rotatif (9) hydraulique et à pouvoir pivoter autour d'un axe de pivotement (11) orthogonal à l'axe de rotation (5) au moyen d'un entraînement pivotant (12) hydraulique, lequel dispositif de changement rapide comprend des logements (23, 24) et au moins un élément de verrouillage (26) pouvant être actionné au moyen d'un entraînement hydraulique (27) pour le maintien d'un outil porté (46) accouplé au dispositif de changement rapide (1), **caractérisé par** un appareil de commande hydraulique (44) qui comprend un premier circuit de commande (47) pour la commande de l'entraînement rotatif (9) et de l'entraînement pivotant (12), au moins un autre circuit de commande (61) pour l'alimentation de l'outil porté (46) accouplé au dispositif de changement rapide (1) et un agencement de soupapes de changement (64) pour la sollicitation de l'entraînement hydraulique (27) par la pression la plus élevée parmi les pressions agissant dans le premier ou l'au moins un autre circuit de commande (47, 61) pour l'actionnement de l'au moins un élément de verrouillage (26), dans lequel l'agencement de soupapes de changement (64) est monté en amont d'un circuit de commande (51) pour la commande du mouvement de l'au moins un élément de verrouillage (26) actionné par l'entraînement hydraulique (27) entre une position de verrouillage et une position de libération.

2. Système de changement rapide selon la revendication 1,
**caractérisé en ce que** l'agencement de soupapes de changement (64) comprend deux soupapes de changement (65, 66) disposées entre l'autre circuit de commande (61) et l'entraînement hydraulique (27).

3. Système de changement rapide selon la revendication 2,
**caractérisé en ce que** les deux soupapes de changement (65, 66) sont montées l'une derrière l'autre.

4. Système de changement rapide selon la revendication l'une des revendications 1 à 3, **caractérisé en ce que** le circuit de commande (51) permettant de commander le mouvement de l'au moins un élément de verrouillage (26) actionné par l'entraînement hydraulique (27) comprend des soupapes antiretour (52 à 55) disposées à la manière d'un circuit redresseur et un distributeur (57).

5. Système de changement rapide selon l'une des revendications 1 à 4, **caractérisé en ce que** le premier circuit de commande (47) et l'au moins un autre circuit de commande (61) sont reliés à l'entraînement hydraulique (27) par l'intermédiaire du circuit de commande (51) et d'un joint tournant (6) intégré dans le dispositif de changement rapide (1).

6. Système de changement rapide selon la revendication 5,
**caractérisé en ce que** le joint tournant (6) comprend un stator (7) disposé à l'intérieur d'une ouverture de passage (30) d'un boîtier d'entraînement (4) et un rotor (8) monté de manière à pouvoir tourner à l'intérieur du stator (7).

7. Système de changement rapide selon l'une des revendications 1 à 6, **caractérisé en ce qu'**au moyen du premier circuit de commande (47), l'entraînement pivotant (12) peut être commandé par l'intermédiaire d'un premier distributeur (48) et l'entraînement rotatif (9) peut être commandé par l'intermédiaire d'un second distributeur (49).

8. Système de changement rapide selon l'une des revendications 1 à 7, **caractérisé en ce qu'**au moyen du premier circuit de commande (47), au moins un autre consommateur supplémentaire (45) peut être commandé par l'intermédiaire d'un distributeur (50).
